# EUROPÄISCHE PATENTANMELDUNG

(11) **EP 2 823 710 A1**
(43) Veröffentlichungstag der Anmeldung: **14.01.2015**
(21) Anmeldenummer: 14176168.4
(22) Anmeldetag: 08.07.2014
(51) Int. Cl.: A22C 11/02

(54) **Bereitschaftsreservoir, Pressvorrichtung und Verfahren zum Herstellen eines extrudierten Lebensmittelerzeugnisses**

(30) Priorität: 08.07.2013 DE 102013107182
(71) Anmelder: Reiß, Hilmar, 97342 Obernbreit (DE)
(72) Erfinder: Reiß, Hilmar, 97342 Obernbreit (DE)
(74) Vertreter: Pöhner, Wilfried Anton

(57) **Zusammenfassung**

Die Erfindung betrifft Verfahren zum Herstellen eines extrudierten Lebensmittelerzeugnisses mittels einer durch Extrusion über eine Düse (4) durchgepressten knetbaren Lebensmittelmasse (32, 72), wobei das Verfahren wenigstens folgende Schritte umfasst:
a) die Lebensmittelmasse (32) in ein, in wenigstens einer Richtung, flexibles abgedichtetes Bereitschaftsreservoir (3, 7) eingefüllt wird oder bereitgestellt vorliegt;
b) das gefüllte flexible Bereitschaftsreservoir (3, 7), in einer beliebigen Reihenfolge, an eine Düse (4) einer Pressvorrichtung (2, 8) angeschlossen und in einer Pressvorrichtung (2, 8) positioniert wird;
c) die Pressvorrichtung (2, 8) betätigt wird, sodass die knetbare Lebensmittelmasse (32, 72) aus der Düse (4) austritt;
d) die herausgepresste Lebensmittelmasse nach Länge (L) abgelängt wird.

## Beschreibung

Die Erfindung betrifft ein Verfahren zum Herstellen eines extrudierten Lebensmittelerzeugnisses, eine Pressvorrichtung, ein Bereitschaftsreservoir, eine Verwendung eines Bereitschaftsreservoirs, eine Verwendung einer Pressvorrichtung, eine Grill- und/oder Brateinrichtung und eine Düse für eine Pressvorrichtung und ein Bereitschaftsreservoir mit den in den Oberbegriffen jeweiliger unabhängiger Ansprüche genannten Merkmalen.

Es ist bekannt, dass Wursterzeugnisse durch Befüllung einer knetbar plastifizierten Fleischmasse, genannt Wurstbrät, in einen künstlichen Darm oder Naturdarm maschinell oder manuell hergestellt werden. Für die manuelle Befüllung der Därme werden seit dem Altertum sogenannte Wurstbefüller eingesetzt, die eine Art vergrößerte Spritze darstellen, deren Kolben die Wurstmasse aus einem Zylinder durch eine oft austauschbare Düse herauszupressen vermag, wenn er hinein geschoben wird. Weil hierzu recht hohe Kräfte benötigt werden, setzt man mechanisch übersetzende verstärkende Mechaniken ein, die Zahnräder, Schneckenantrieb, Spindelantrieb oder Zahnstangen verwenden. Nachteilig zumindest für den häuslichen Gebrauch ist dabei, dass das Innere des Wurstbefüllers in Kontakt mit dem Lebensmittel ist und daher aus einem lebensmittelechten Material gefertigt und zwischen den Einsätzen aufwendig hygienisch gereinigt und behandelt werden muss. Das stellt das Haupthindernis dar, einen Wurstbefüller zur Herstellung von selbst gemachten Würsten im häuslichen Gebrauch einzusetzen. Der Verbraucher aber zeigt wachsende Bedürfnisse, in seiner Freizeit kulinarisch tätig zu werden und schätzt immer mehr das Selbstgemachte.

Eine Alternative dazu bilden mit Wurstbefülldüsen ausgestattete manuell bedienbare Fleischwölfe mit Extrusions-Düseneinsätzen, die jedoch ebenso aufwendig zu reinigen sind und wegen Aufstellaufwandes auf einer stabilen Unterlage kaum außerhalb der Küche, beispielsweise unmittelbar in der Nähe eines Grillgerätes in geselliger Runde einsetzbar sind. Außerdem müssen sowohl Wurstspritzen als auch Fleischwölfe zwischengereinigt werden, wenn die zu befüllende Lebensmittelmasse zwischenzeitlich gegen eine Andere gewechselt werden soll, was einen freizeitlichen Betrieb erheblich belasten würde.

Es sind ferner kleine Tuben mit Lebensmittelmassen wie Tomatenmark, Senf und so weiter bekannt, die nach dem Öffnen manuell ausdrückbar sind. Diese sind jedoch für die Verwendung mit einem Wurstbrät ungeeignet und erfordern einen erfinderischen Schritt, um sie einsetzbar gestalten zu können. Ferner könnte auch nur ein erfinderisch tätiger Fachmann aus einem ganz anderen Fachgebiet, nämlich der Baustoffe, sich Anregungen von den dort bekannten Zylinder und Kolben enthaltenden Kartuschen mit Silikonfugenmassen holen, die mithilfe einer Pressvorrichtung mittels einer anschraubbaren Düse ausdrückbar sind.

Der Erfindung liegt die Aufgabe zugrunde, dem Verbraucher zu ermöglichen, Wursterzeugnisse im häuslichen Umfeld oder in einer Freizeitsituation in kleinen Mengen, optional aus verschiedenen Lebensmittelbefüllungen auswählbar, ohne Aufwendig, hygienisch und schnell herstellen zu können. Ferner soll die gleiche Technik auch zur erfindungsgemäßen Herstellung weiterer nichtfleischhaltiger extrudierter Lebensmittelerzeugnisse einsetzbar sein, um den Nutzwert der Vorrichtung zu erhöhen.

Diese Aufgabe wird durch ein Verfahren mit den Merkmalen des Anspruchs 1 gelöst. Weitere besonders vorteilhafte Ausgestaltungen der Erfindung offenbaren die Unteransprüche.

Das erfindungsgemäße Verfahren zum Herstellen eines extrudierten Lebensmittelerzeugnisses mittels einer durch Extrusion über eine Düse durchgepressten knetbaren und plastisch fließbaren Lebensmittelmasse umfasst zumindestens folgende Schritte:
a) die Lebensmittelmasse in ein, in wenigstens einer Richtung flexibles und gegenüber Umgebung abgedichtetes Bereitschaftsreservoir einfüllen oder bereitstellen;
b) das gefüllte flexible Bereitschaftsreservoir, in einer beliebigen Reihenfolge, an eine Düse einer Pressvorrichtung anschließen und in einer Pressvorrichtung positionieren;
c) die Pressvorrichtung betätigen, sodass die knetbare Lebensmittelmasse aus der Düse austritt;
d) die herausgepresste Lebensmittelmasse nach vorgegebener oder vorgebbarer Länge ablängen.

Das erfindungsgemäße Verfahren ist in weiterer Ausgestaltung noch effektiver, wenn der Schritt b) einen Unterschritt b1) aufweist, in dem das flexible Bereitschaftsreservoir an dem zur Düse zugewandten Ende geöffnet wird, sodass die knetbare Lebensmittelmasse infolge des aufzubringenden Pressdrucks austreten kann.

Ferner kann das erfindungsgemäße Verfahren dadurch wesentlich gewinnen, wenn als ein Unterschritt d1) vor dem Schritt d) ein Wurstdarm von außen auf die Düse aufgezogen und festgemacht wird, wobei der Wurstdarm eine Hülle aus Naturdarm oder einem Kunststoffdarm aufweist.

Weitere bevorzugte Ausgestaltungen des erfindungsgemäßen Verfahrens lassen sich dadurch erreichen, dass die Betätigung der Pressvorrichtung manuell oder mechanisiert, bevorzugt elektromechanisch ausgeführt wird, wobei eine Betätigungsvorrichtung mit einer Kurbelmechanik, einem Spindelantrieb, einem Übersetzungsgetriebe und/oder eine an einem Koppelanschluss mechanisch ankoppelbare Bohrmaschine oder Schrauber oder ein integrierter Elektromotor eingesetzt sein können.

Eine alternative bevorzugte Ausgestaltung des erfindungsgemäßen Verfahrens ermöglicht, dass die Lebensmittelmasse direkt ohne einen Wurstdarm, bevorzugt auf oder in eine Essenszubereitungsvorrichtung, wie Pfanne, Grill oder Kochtopf abgelängt wird. Dadurch kann die aus der Düse herausgepresste knetbare Lebensmittelmasse auch ohne Darm direkt abgelängt und so darmlos zubereitet werden, beispielsweise direkt auf eine Pfanne oder Grillrost extrudiert, um darmlose extrudierte Erzeugnisse beispielsweise wie Cevapcici oder Nudeln aus Teig herzustellen. Es kann damit ferner eine künstlerisch ornamentale Gestaltung mit Lebensmitteln ausgeführt werden.

Besondere Vorteile erreicht das erfindungsgemäße Verfahren, wenn der Anwender zuvor die knetbare Lebensmittelmasse aus einer Vielzahl möglicher Lebensmittel und Zutaten nach seinem Belieben zubereiten und in das flexible Bereitschaftsreservoir einfüllen kann, wie es eine bevorzugte Ausgestaltung anbietet.

Die Lebensmittelmasse kann aus einer unvollständigen Aufzählung aus verschiedenen zerhackten oder zermahlenen Fleischarten, Innereien, Wurstzutaten, Fetten, Gemüse und Gewürzen in beliebiger Kombination oder einem aus Getreidemehl bestehenden Teig zubereitet werden. Wurst- und Nudel-Teigwaren können so erfindungsgemäß schnell hintereinander mit einer Pressvorrichtung hergestellt werden, wobei besonders für die Nudeln verschiedene Düsenformen und -größen bereitgestellt werden können. Nur beispielhaft und nicht abschließend aufgezählt können Teigwaren wie Spätzle, Spaghetti oder Makkaroni hergestellt werden. Es können ferner als Lebensmittelmasse beispielsweise Wurstbrät nach einer bekannten Rezeptur wie Nürnberger Bratwurstart (geschützte geografische Marke), Thüringer Leberwurst und dergleichen angeboten oder selbst zubereitet werden.

Nach einem weiteren Aspekt werden die erfindungsgemäßen Aufgaben durch eine Pressvorrichtung, insbesondere einen modifizierten Wurstbefüller, zum Ausführen des erfindungsgemäßen Verfahrens gelöst. Hierzu weist die Pressvorrichtung ein Druckerzeugungsmittel auf, um ein mit einer knetbaren Lebensmittelmasse befülltes flexibles Bereitschaftsreservoir auszupressen, sodass die Innenwandung oder Gestängeteile der Pressvorrichtung mit der Lebensmittelmasse nicht in Berührung kommen können. Das Druckerzeugungsmittel kann ein Bestandteil der Pressvorrichtung oder wenigstens zum Teil auch des Bereitschaftsreservoirs sein, wie im Fall einer im Folgenden beschriebenen Kartusche mit einem Kolben.

In weiteren bevorzugten Ausgestaltungen der Pressvorrichtung kann das Druckerzeugungsmittel als ein in einem Zylinder oder einem Gestänge verschiebbarer Kolben ausgebildet sein. Der Zylinder und Kolben der Pressvorrichtung sowie das Bereitschaftsreservoir können ferner einen Querschnitt aufweisen, der neben einer bevorzugten zylindrischen Form eine beliebige weitere geometrische Form aus einer unvollständigen Aufzählung wie ovale, rechteckige, quadratische, dreieckige oder polygonale haben kann.

In einer zweckmäßigen Ausgestaltung ist vorgesehen, am Kolben mehrere radial verlaufende Verbindungsstege anzubringen, sie nach außerhalb des Zylinders zu führen und dort jeweils mit einem Spindeltrieb in Verbindung zu setzen. Die Verbindungsstege durchgreifen hierbei in axiale Richtung des Zylinders verlaufende Schlitze. Die Spindeltriebe sind hierbei in der Weise relativ zueinander zu bemessen, dass bei deren Aktivierung eine synchrone translatorische Bewegung des Kolbens in Achsrichtung des Zylinders unter Beibehaltung seiner radialen Ausrichtung vorgenommen werden kann. Dies erfolgt durch eine entsprechende Dimensionierung der Gewinde der Spindeltriebe. Dabei hat die über ein gemeinsames Getriebe bewirkte Betätigung der Spindel auch zur Voraussetzung, dass alle Spindeltriebe eine gemeinsame und synchrone Vorwärts- (zum Auspressen) oder Rückwärtsbewegung (zum Öffnen) des Kolbens ausführen muss. Drehsinn aller Spindel und die Orientierung deren Gewinde sind deshalb in entsprechender, dem Fachmann bekannter Weise aneinander anzupassen, in dem Sinne, dass eine gleichförmige in axialer Richtung erfolgende Bewegung der Spindel (und damit der Kolben) stattfindet, um auf diese Weise die radiale Ausrichtung des Kolbens sicherzustellen.

Die seitlich angebrachten und die Zylinder durchgreifenden Schlitze stellen keine Beeinträchtigung der Funktion dar, denn das Bereitschaftsreservoir garantiert, dass durch die Schlitze keine Lebensmittelmasse nach außen gelangen kann. Einzig über die stirnseitige Öffnung wird die Masse nach außen gepresst.

Der Vorteil besteht zum einen darin, dass vergleichbar große Kräfte auf den Kolben übertragen werden können und zudem die Ausrichtung des Kolbens in der radialen Ebene stets sichergestellt ist. Somit ist ein die Funktion beeinträchtigendes Kippen des Kolbens und demzufolge eine Verschlechterung der Funktionsfähigkeit mit Sicherheit ausgeschlossen. Grundsätzlich steht die Anzahl der Spindeltriebe im Rahmen der Erfindung frei.

Zur Verwirklichung einer symmetrischen Krafteinwirkung auf den Kolben sollte für die Spindeltriebe eine im Winkel äquidistante Anordnung vorgesehen sein. Demnach beträgt bei Vorliegen von drei Spindel der Abstand zwischen benachbarten Spindeltrieben jeweils 120°. Im Falle zweier Spindeltriebe befinden sich beide in diametraler Anordnung einander gegenüberliegend.

Gemäß einer weiteren bevorzugten Ausgestaltung weist die Pressvorrichtung eine Betätigungsvorrichtung auf, die mit einer manuellen Kurbelmechanik, einem Übersetzungsgetriebe, einem Spindelantrieb und/oder einer an einem Koppelanschluss mechanisch ankoppelbaren Bohrmaschine oder einem Schrauber oder einem integrierten Elektromotor ausgestattet sein kann. Die Bohrmaschine oder Schrauber ist bevorzugt Batterie betrieben, bevorzugt von einer aufladbaren Batterie, um einen netzunabhängigen Einsatz zu ermöglichen.

Ferner kann die Pressvorrichtung nach einer weiteren bevorzugten Ausgestaltung ein Öffnungsmittel aufweisen, das eingerichtet ist, das flexible Bereitschaftsreservoir durch die Einführbewegung zu öffnen. Das Öffnungsmittel kann hierzu bevorzugt als eine Schneidkante an der Innenseite der Düse ausgebildet sein. Alternativ kann ein als Darmhülle ausgebildetes Bereitschaftsreservoir vor dem Einsetzen durch Aufschneiden an einem seiner Enden geöffnet werden.

Nach noch einem weiteren Aspekt werden die erfindungsgemäßen Aufgaben durch ein Bereitschaftsreservoir mit einem veränderbaren Volumen zur Aufnahme einer knetbaren Lebensmittelmasse zum Ausführen des erfindungsgemäßen Verfahrens zum Herstellen eines extrudierten Lebensmittelerzeugnisses gelöst. Hierzu ist die knetbare Lebensmittelmasse in dem Bereitschaftsreservoir nur temporär bis zur Weiterverarbeitung in einem Extrusionsverfahren durch eine Pressvorrichtung aufbewahrt. Das flexible Bereitschaftsreservoir kann als eine in allen Richtungen flexible Bereitschafts-Umhüllung oder eine in nur einer Richtung entlang ihrer Achse flexible Kartusche ausgebildet sein.

Dazu weist das in wenigstens einer Richtung flexible Bereitschaftsreservoir eine dichte und flexible Darmhülle auf, oder ist als eine Kartusche aufweisend einen abgedichteten Zylinder und einen darin abgedichtet verschiebbaren Kolben ausgebildet.

Dabei kann das Bereitschaftsreservoir als eine Einweg- oder eine nachfüllbare Mehrwegvorrichtung ausgeführt sein, und ist zumindest innenseitig mit einem lebensmittelechten und sterilisierten und/oder sterilisierbaren Material, bevorzugt aus Metall, Keramik, Glas oder Kunststoff in beliebiger Kombination ausgestattet.

Die flexible Darmhülle oder Kartusche des Bereitschaftsreservoirs ist bevorzugt derart ausgeführt, dass keine Durchlässigkeit für Bakterien besteht. Ein Sterildarm kann hierfür eingesetzt werden. Die Kartusche kann bevorzugterweise eine anbringbare, beispielsweise durch eine Schraubverbindung, oder eine fest angeordnete Düse aufweisen. Eine Vielzahl austauschbarer Düsen kann verschiedene Durchmesser und Profilformen, sowie nur eine oder mehrere Öffnungen bereitstellen. Eine Düse kann ferner verjüngt konisch oder zylindrisch ausgebildet sein, wobei die zylindrische Ausgestaltung besonders zur Wurstherstellung geeignet ist.

Der lebensmittelechte Kunststoff kann aus einer unvollständigen Aufzählung von Polyethylen (PE), Polypropylen (PP), Polyethylenterephthalat (PET), Silikonkautschuk oder deren Zusammensetzungen gewählt sein.

In bevorzugten Ausgestaltungen ist ferner der Umfang der Darmhülle oder Kartusche des Bereitschaftsreservoirs und der innere Umfang der Pressvorrichtung so dimensioniert, dass wenigstens nach Befüllung mit der Lebensmittelmasse das gefüllte Bereitschaftsreservoir in die Pressvorrichtung einführbar ist.

Gemäß einer bevorzugten Ausführungsform kann das Bereitschaftsreservoir als eine Kartusche, ein Beutel, ein flexibles Behältnis oder flexible Folienumhüllung ausgebildet sein, wobei der Umfang der Darmhülle oder Kartusche zwischen 30 und 130 mm, bevorzugt zwischen 40 und 100 mm, insbesondere zwischen 50 und 90 mm betragen kann. Hierdurch ist die Handhabung des Bereitschaftsreservoirs durch Anwender erleichtert. Das befüllte Bereitschaftsreservoir kann ferner als eine Tiefkühlware angeboten und gehandhabt werden.

Das erfindungsgemäße Bereitschaftsreservoir kann mit einer Lebensmittelmasse aus einer unvollständigen Aufzählung aus verschiedenen zerhackten oder zermahlenen Fleischarten, Fetten, Wurstzutaten, Gemüse und Gewürzen in beliebiger Kombination oder einem aus Getreidemehl zubereiteten Teig befüllt oder befüllbar ausgebildet sein.

Nach noch einem weiteren Aspekt werden die erfindungsgemäßen Aufgaben durch eine Verwendung eines erfindungsgemäßen Bereitschaftsreservoirs nach einer der vorhergehend beschriebenen Ausgestaltungen zur temporären Aufnahme von einem Wurstbrät oder einem Teig gelöst.

Nach noch einem weiteren Vorschlag werden die erfindungsgemäßen Aufgaben durch Verwendung einer Pressvorrichtung zum Auspressen einer Lebensmittelmasse, bevorzugt eines Wurstbräts oder Teigs, durch eine Düse aus einem Bereitschaftsreservoir nach einer der vorhergehend beschriebenen Ausgestaltung gelöst.

Nach immer noch einem weiteren Aspekt werden die erfindungsgemäßen Aufgaben durch eine Grill- und/oder Brateinrichtung, aufweisend einen Grill und/oder Pfanne, eine Pressvorrichtung und wenigstens ein mit einer knetbaren Lebensmittelmasse, bevorzugt mit einem Wurstbrät, gefülltes flexibles Bereitschaftsreservoir nach einer der vorhergehend beschriebenen Ausgestaltungen gelöst.

Die Verwendung der erfindungsgemäßen Vorrichtungen in Gegenwart mehrerer Personen kann im Freizeitbereich und speziell bei gemeinschaftlicher Handhabung zu einem gesellschaftlichen Ereignis werden und zur Unterhaltung und Kommunikation bei Groß und Klein beitragen.

Nach einem weiteren erfindungsgemäßen Vorschlag werden die erfindungsgemäßen Aufgaben durch eine Düse für eine Pressvorrichtung und ein Bereitschaftsreservoir nach einer der vorhergehend beschriebenen Ausgestaltungen dadurch gelöst, dass an ihrem dem Wurstbrät zugewandten Ende ein Öffnungsmittel in Gestalt eines scharfkantigen Vorsprungs ausgebildet ist, der dafür vorgesehen ist, die Darmhülle und/oder Verschluss eines Bereitschaftsreservoirs durch die Positionierungsbewegung zu durchstechen und somit zu öffnen. Die Positionierungsbewegung ist eine relative Bewegung der Düse und des Bereitschaftsreservoirs zueinander. Die Düsen können als Einweg- oder als ein zu reinigender Mehrwegartikel angeboten sein.

Weitere bevorzugte Ausgestaltungen der Erfindung ergeben sich aus den übrigen, in den Unteransprüchen genannten Merkmalen.

Es ist darauf hinzuweisen, dass die in der vorliegenden Beschreibung einzeln aufgeführten Merkmale in beliebiger technisch sinnvoller Weise miteinander kombiniert werden und weitere Ausgestaltungen der Erfindung aufzeigen können. Die Beschreibung charakterisiert und spezifiziert die Erfindung insbesondere im Zusammenhang mit den Figuren zusätzlich.

Die Erfindung wird nachfolgend in Ausführungsbeispielen anhand der zugehörigen Zeichnungen erläutert. Es zeigen:
- Figur 1: eine schematische Querschnittsansicht der erfindungsgemäßen Pressvorrichtung mit einem erfindungsgemäßen Bereitschaftsreservoir,
- Figur 2: eine schematische Querschnittsansicht eines erfindungsgemäßen Bereitschaftsreservoirs,
- Figur 3: eine schematische Querschnittsansicht einer Düse,
- Figur 4: eine schematische Querschnittsansicht eines erfindungsgemäßen Bereitschaftsreservoirs nach einer weiteren Ausgestaltung, und
- Figur 5: eine schematische Querschnittsansicht einer weiteren erfindungsgemäßen Pressvorrichtung mit einem erfindungsgemäßen Bereitschaftsreservoir.

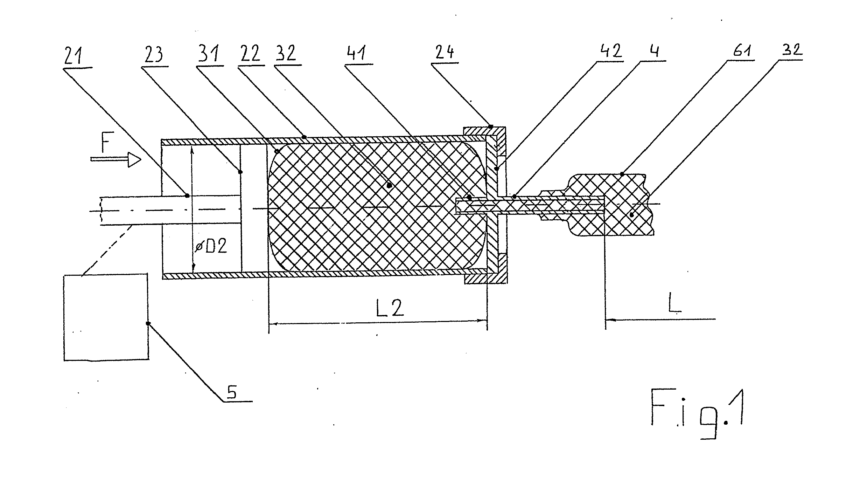

**Figur 1** zeigt eine schematische Querschnittsansicht der erfindungsgemäßen Anordnung aus einer Pressvorrichtung 2 mit einem in sie eingesetzten erfindungsgemäßen Bereitschaftsreservoir 3 nach einer ersten bevorzugten Ausgestaltung.

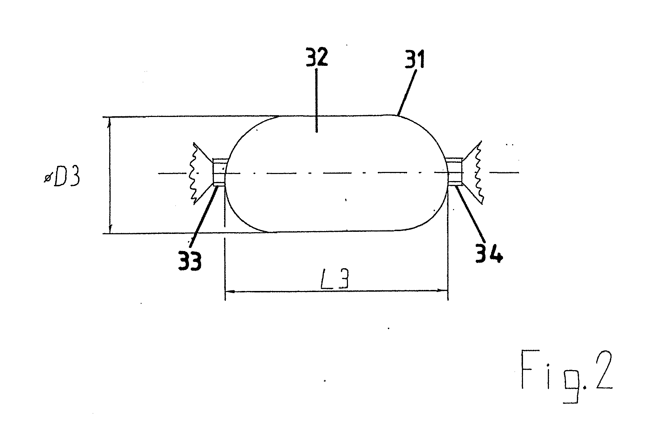

Das Bereitschaftsreservoir 3, wie weiter in Figur 2 beschrieben, weist eine flexible abgedichtete Darmhülle 31 auf, in die eine plastifizierte oder knetbare Lebensmittelmasse 32 eingefüllt ist. Die Darmhülle 31 des Bereitschaftsreservoirs 3 ist an ihrem zur Düse 4 zugewandten Ende geöffnet und auf ein Öffnungsmittel 41 der Düse 4 aufgesteckt. Das flexible Bereitschaftsreservoir 3 kann hierfür vorher am Ende aufgeschnitten, durchstochen oder durch Einführbewegung auf eine scharfkantig ausgeführte Kante des Öffnungsmittels 41 gleichzeitig geöffnet und aufgeschoben werden.

Die Pressvorrichtung 2 weist einen Zylinder 22 auf, in dem eine Pressdruckplatte 23 beweglich gelagert ist und von einer Stange 21 eine Kraft F ausübend gegen das rückseitige Ende des Bereitschaftsreservoirs 3 gedrückt werden kann. Die Pressdruckplatte 23 kann muss aber nicht als ein abgedichteter Kolben 23 im Zylinder 22 ausgebildet sein, weil die Darmhülle 31 des Bereitschaftsreservoirs 3 für dichten Abschluss der Lebensmittelmasse 32 sorgt. Es genügt, wenn die Pressdruckplatte 23 im Zylinder 22 eine ausreichende Führung hat und ihre Fläche einen für die Druckübermittlung auf eine flexible Darmhülle 31 ausreichenden Querschnitt aufweist.

Die Düse 4 ist vorzugsweise von vorne, beispielsweise mittels einer Lochschraube 24, an dem Zylinder 22 kraftschlüssig anbringbar, sodass sie gegen andere Düsen austauschbar ist. Ebenso kann das Bereitschaftsreservoir 3 bei abgenommener Düse in den Zylinder 22 von vorne eingesetzt sein. Die Düse 4 ist bevorzugt als ein Zylinder ausgebildet, was sich zum Herstellen von Würsten besser eignet, als eine sich verjüngende Düse.

Auf das Ende der Düse 4 kann ein Anwender einen Wurstdarm 61 aufziehen und die Lebensmittelmasse 32 einfüllen. Nach Erreichen der gewünschten Wurstlänge kann der Anwender den Wurstdarm 61 wie üblich durch Drehen der Wurst verengen, abbinden oder abklemmen und wenn gewünscht auch abschneiden.

Die Stange 21 kann wahlweise direkt manuell betätigt werden oder über eine Kraft verstärkende manuell oder elektromechanisch betätigbare Mechanik, die hier schematisch mit dem Funktionskasten 5 dargestellt ist, in Bewegung gesetzt werden.

**Figur 2** zeigt eine schematische Querschnittsansicht eines erfindungsgemäßen Bereitschaftsreservoirs 3 nach einer ersten bevorzugten Ausgestaltung. Diese Ausgestaltung ähnelt selbst einer fertigen Wurst, enthält jedoch erfindungsgemäß lediglich vorübergehend die Lebensmittelmasse 32 in einer als ein Wurstdarm ausgebildeten Darmhülle 31, die nur beispielhaft an beiden Enden wie eine Wurst mit Klipsverschlüssen 33, 34 verschlossen ist. Das Bereitschaftsreservoir 3 kann in jeder Richtung flexibel in einer Pressvorrichtung zusammengedrückt werden, bevorzugt jedoch in der axialen Richtung wie in Figur 1 beschrieben.

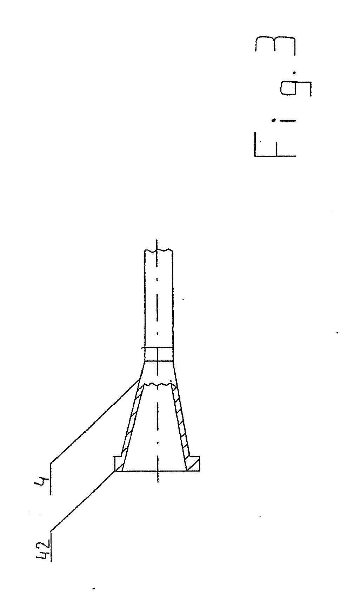

**Figur 3** zeigt eine schematische Querschnittsansicht einer weiteren Düse 4, die eine sich verjüngende Form aufweist.

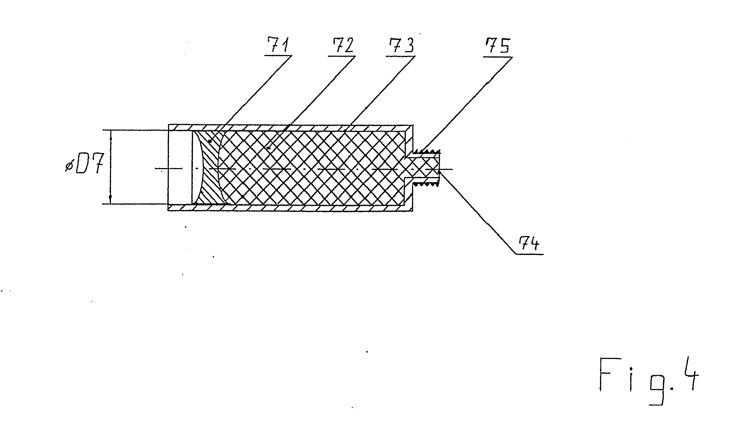

**Figur 4** zeigt eine schematische Querschnittsansicht eines erfindungsgemäßen Bereitschaftsreservoirs 7 nach einer zweiten bevorzugten Ausgestaltung. In diesem Fall weist das Bereitschaftsreservoir 3 in der Art einer Kartusche einen Zylinder 73 aus einem festen Material auf, in dem ein Kolben 71 abgedichtet beweglich gelagert ist. Die Kartusche ist an ihrem zur Düse 4 gewandten Ende mit einem Austrittsstutzen 75 ausgestattet, der hygienisch verschlossen ist. Der Verschluss kann beispielsweise mit einer Alu- oder Kunststofffolie per Klebung oder thermoplastischem Verschweißen erfolgt sein, oder es kann eine (nicht dargestellte) Schraubkappe verwendet sein. Der Austrittsstutzen 75 weist hierzu bevorzugt ein Gewinde oder einen Bajonettverschluss auf.

Der Durchmesser D₇ des Zylinders 73 ist so bemessen, dass die Kartusche bequem von Hand gehalten sein kann und in die dafür vorgesehene Pressvorrichtung passt.

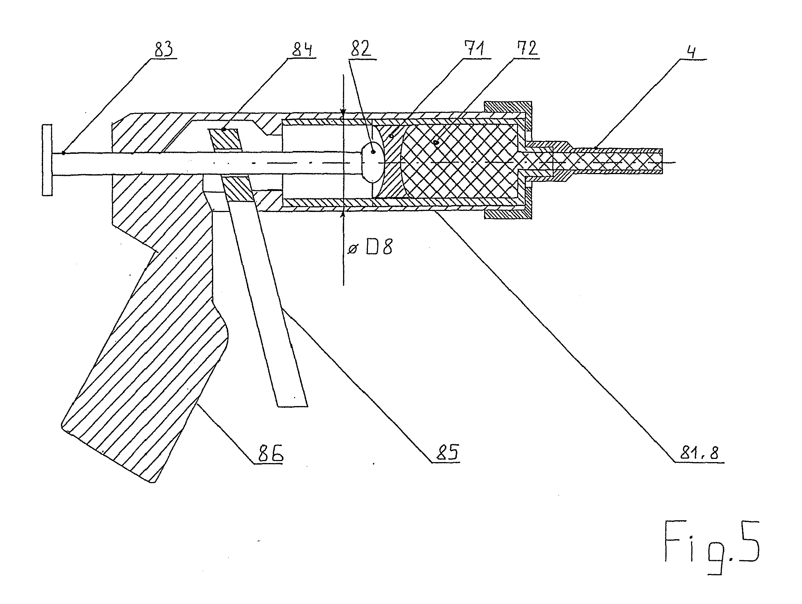

**Figur 5** zeigt eine schematische Querschnittsansicht einer weiteren erfindungsgemäßen Pressvorrichtung 8 mit einem erfindungsgemäßen Bereitschaftsreservoir 7 nach einer zweiten bevorzugten Ausgestaltung, wie vorhergehend beschrieben.

Die mit der Lebensmittelmasse 72 befüllte Kartusche 7 ist in eine mit einem Griff 86 pistolenartig ausgebildete Pressvorrichtung 8 eingesetzt. An dem Austrittsstutzen 75 der Kartusche 7 wird der Verschluss entfernt oder aufgebrochen und eine bevorzugt sterile lebensmittelechte Düse 4 angebracht. Dies kann sowohl nach dem Einsetzen der Kartusche 7 in die Pressvorrichtung 8 als auch danach ausgeführt werden.

Die Stange 83 wird nach dem Einsetzen der Kartusche 7 im Zylinder oder teiloffenem Gestänge 81 der Pressvorrichtung gegen den Kolben 71 der Kartusche manuell gedrückt. Weiter kann von einem Anwender mit einer Kraft verstärkenden Übersetzung am Handhebel 85 über eine Klemmplatte 84 in kleinen, zu wiederholenden Schritten eine Presskraft auf den Kolben 71 und somit auf die knetbare Lebensmittelmasse 72 ausgeübt werden.

Daraufhin würde die Lebensmittelmasse 72 aus der Düse 4 austreten. Die austretende Lebensmittelmasse 72 kann wie in Figur 1 dargestellt in einen Wurstdarm 61 abgefüllt und abgelängt werden, oder direkt ohne Darm abgelängt werden.

### Bezugszeichenliste

- 1: Wurstherstellungs-Anordnung
- 2: Pressvorrichtung
- 21: Stange
- 22: Zylinder
- 23: Kolben, Druckerzeugungsmittel, Pressdruckplatte
- 24: Lochschraube
- 3: Bereitschaftsreservoir
- 31: Darmhülle
- 32: Lebensmittelmasse
- 33, 34: Klipsverschluss
- 4: Düse
- 41: Öffnungsmittel
- 42: Schließscheibe
- 5: Antriebsmechanik
- 6, 61: Wurstdarm
- 7: Bereitschaftsreservoir, Kartusche
- 71: Kolben
- 72: Lebensmittelmasse
- 73: Zylinder
- 74: Verschluss
- 75: Austrittsstutzen
- 8: Pressvorrichtung
- 81: Gestänge
- 82: Druckkoppler
- 83: Stange
- 84: Klemmplatte
- 85: Handhebel
- 86: Griff

## Patentansprüche

1. Verfahren zum Herstellen eines extrudierten Lebensmittelerzeugnisses mittels einer durch Extrusion über eine Düse (4) durchgepressten knetbaren Lebensmittelmasse (32, 72), **dadurch gekennzeichnet, dass**
a) die Lebensmittelmasse (32) in ein, in wenigstens einer Richtung, flexibles abgedichtetes Bereitschaftsreservoir (3, 7) eingefüllt wird oder bereitgestellt vorliegt;
b) das gefüllte flexible Bereitschaftsreservoir (3, 7), in einer beliebigen Reihenfolge, an eine Düse (4) einer Pressvorrichtung (2, 8) angeschlossen und in einer Pressvorrichtung (2, 8) positioniert wird;
c) die Pressvorrichtung (2, 8) betätigt wird, sodass die knetbare Lebensmittelmasse (32, 72) aus der Düse (4) austritt; - die herausgepresste Lebensmittelmasse nach Länge (L) abgelängt wird.

2. Verfahren nach Anspruch 1, **dadurch gekennzeichnet, dass** b1) das flexible Bereitschaftsreservoir (3, 7) an dem zur Düse (4) zugewandten Ende vor dem Schritt b) geöffnet wird, sodass dort die knetbare Lebensmittelmasse (32, 72) infolge von aufzubringendem Pressdruck austreten kann.

3. Verfahren nach einem der vorhergehenden Ansprüche, **dadurch gekennzeichnet, dass** d1) vor dem Schritt d) ein Wurstdarm (61) von außen auf die Düse (4) aufgezogen und festgemacht wird, wobei der Wurstdarm eine Hülle aus Naturdarm oder einem Kunststoffdarm aufweist.

4. Verfahren nach einem der vorhergehenden Ansprüche, **dadurch gekennzeichnet, dass** c1) die Betätigung der Pressvorrichtung (2, 8) manuell oder mechanisiert, bevorzugt elektromechanisch ausgeführt wird, wobei eine Betätigungsvorrichtung (5) mit einer Kurbelmechanik, einem Spindelantrieb, einem Übersetzungsgetriebe und/oder eine an einem Koppelanschluss mechanisch ankoppelbare Bohrmaschine oder Schrauber oder ein integrierter Elektromotor eingesetzt sein können.

5. Verfahren nach einem der vorhergehenden Ansprüche außer Anspruch 3, **dadurch gekennzeichnet, dass** d2) die Lebensmittelmasse (32, 72) direkt ohne einen Wurstdarm (61) auf oder in eine Essenszubereitungsvorrichtung, wie Pfanne, Grill oder Kochtopf abgelängt wird.

6. Verfahren nach einem der vorhergehenden Ansprüche, **dadurch gekennzeichnet, dass** a1) der Anwender zuvor die knetbare Lebensmittelmasse (32) aus einer Anzahl möglicher Lebensmittel und Zutaten nach seinem Belieben zubereiten und in das flexible Bereitschaftsreservoir (3, 31, 7, 73) einfüllen kann.

7. Pressvorrichtung (2, 8), zum Ausführen des Verfahrens nach einem der vorhergehenden Ansprüche zum Herstellen eines extrudierten Lebensmittelerzeugnisses, **dadurch gekennzeichnet, dass** ein Druckerzeugungsmittel (21, 23, 71, 83) vorgesehen ist, um ein mit einer knetbaren Lebensmittelmasse (32, 72) befülltes flexibles Bereitschaftsreservoir (3, 7) auszupressen, sodass die Innenwandung oder Gestängeteile (81) des Druckerzeugungsmittels mit der Lebensmittelmasse (32, 72) nicht in Berührung kommen können.

8. Pressvorrichtung (2, 8) nach Anspruch 7, **dadurch gekennzeichnet, dass** das Druckerzeugungsmittel (23, 71) als ein in einem Zylinder (22, 73) oder Gestänge (81) verschiebbarer Kolben (23, 71) ausgebildet ist.

9. Pressvorrichtung nach Anspruch 8, **dadurch gekennzeichnet, dass** der Kolben (23, 71) über mehrere radiale Verbindungsstege nach außerhalb des Zylinders (22, 73) und hierbei in Achsrichtung des Zylinders verlaufende Schlitze durchgreifend geführt ist und dort jeweils mit einem Spindeltrieb antriebsmäßig verbunden ist und die Spindeln derart dimensioniert sind, dass bei deren Aktivierung eine synchrone translatorische Bewegung des Kolbens in Achsrichtung des Zylinders unter Beibehaltung der radialen Ausrichtung erfolgt und die Spindel über ein gemeinsames Getriebe betätigbar sind und bevorzugt die Spindeltriebe im Winkel äquidistant zueinander angeordnet sind.

10. Pressvorrichtung (2, 8) nach einem der vorhergehenden Ansprüche, **dadurch gekennzeichnet, dass** eine Betätigungsvorrichtung (5) vorgesehen ist, aufweisend eine manuelle Kurbelmechanik, ein Übersetzungsgetriebe, einen Spindelantrieb und/oder eine an einem Koppelanschluss mechanisch ankoppelbare Bohrmaschine oder Schrauber oder einen integrierten Elektromotor.

11. Pressvorrichtung (2) nach einem der vorhergehenden Ansprüche, **dadurch gekennzeichnet, dass** ein Öffnungsmittel (41) vorhanden ist, welche das flexible Bereitschaftsreservoir (31) durch die Einführbewegung öffnet.

12. Bereitschaftsreservoir (3, 7) nach einem der vorhergehenden Ansprüche, **dadurch gekennzeichnet, dass**
das in wenigstens einer Richtung flexible Bereitschaftsreservoir (3, 7) eine abgedichtet ausgebildete flexible Darmhülle (31) aufweist,
oder als eine Kartusche (7) aufweisend einen abgedichteten Zylinder (73) und einen darin abgedichtet verschiebbaren Kolben (71) ausgebildet ist,
wobei das Bereitschaftsreservoir (3, 7) als eine Einweg- oder eine nachfüllbare Mehrwegvorrichtung ausgeführt sein kann, und zumindest innenseitig mit einem lebensmittelechten und sterilisierten Material, bevorzugt aus Metall, Keramik, Glas oder Kunststoff, ausgestattet ist.

13. Bereitschaftsreservoir (3, 7) nach einem der vorhergehenden Ansprüche, **dadurch gekennzeichnet, dass** der Umfang (D₃, D₇) der Darmhülle (31) oder Kartusche (73) und der Pressvorrichtung (2, 22, 8, 81) so vorgegeben ist, dass wenigstens nach Befüllung mit Lebensmittelmasse (32, 72) das gefüllte Bereitschaftsreservoir (3, 7) in die Pressvorrichtung (2) einführbar ist.

14. Bereitschaftsreservoir (3, 7) nach einem der vorhergehenden Ansprüche, **dadurch gekennzeichnet, dass** das Bereitschaftsreservoir als eine Kartusche, ein Beutel, ein flexibles Behältnis oder flexible Folienumhüllung ausgebildet sein kann, wobei der Umfang (D₃, D₇) des Bereitschaftsreservoirs (3, 7) zwischen 30 und 130 mm, bevorzugt zwischen 40 und 100 mm, insbesondere zwischen 50 und 90 mm beträgt.

15. Bereitschaftsreservoir (3, 7) nach einem der vorhergehenden Ansprüche, **dadurch gekennzeichnet, dass** die Lebensmittelmasse (32, 72) aus einer unvollständigen Aufzählung aus verschiedenen zerhackten oder zermahlenen Fleischarten, Fetten, Wurstzutaten, Gemüse und Gewürzen in beliebiger Kombination oder einem aus einem Getreidemehl zubereiteten Teig zubereitet ist.
